Europäisches Patentamt

European Patent Office

Office européen des brevets

(19)

(11) Veröffentlichungsnummer : **0 246 411**
**B1**

(12) **EUROPÄISCHE PATENTSCHRIFT**

(45) Veröffentlichungstag der Patentschrift :
11.10.89

(51) Int. Cl.⁴ : **B 65 G 47/91**

(21) Anmeldenummer : 87103725.5

(22) Anmeldetag : 14.03.87

(54) **Vorrichtung zum Aufnehmen, Überführen und Abgeben von flachen Verpackungsgegenständen bei Verpackungsmaschinen.**

(30) Priorität : 23.05.86 DE 3617435

(43) Veröffentlichungstag der Anmeldung :
25.11.87 Patentblatt 87/48

(45) Bekanntmachung des Hinweises auf die Patenterteilung : 11.10.89 Patentblatt 89/41

(84) Benannte Vertragsstaaten :
AT BE CH DE ES FR GB IT LI NL SE

(56) Entgegenhaltungen :
DE–A– 2 328 425
DE–A– 2 922 171
DE–A– 2 923 909
DE–U– 8 414 048
US–A– 3 730 014
US–A– 4 211 153
US–A– 4 516 765

(73) Patentinhaber : **Josef Uhlmann Maschinenfabrik GmbH & Co. KG**

**D-7958 Laupheim (DE)**

(72) Erfinder : **Gertitschke, Detlev**
**Konrad-Adenauer-Strasse 21**
**D-7958 Laupheim (DE)**
Erfinder : **Rittinger Herbert**
**Robert-Koch-Weg 2/2**
**D-7958 Laupheim (DE)**
Erfinder : **Faller, Peter**
**Wittenaustrasse 13/1**
**D-7951 Ummendorf (DE)**

(74) Vertreter : **Fay, Hermann, Dipl.-Phys. Dr.**
**Ensingerstrasse 21 Postfach 1767**
**D-7900 Ulm (Donau) (DE)**

## Beschreibung

Die Erfindung betrifft eine Vorrichtung zum Aufnehmen, Überführen und Abgeben von flachen Verpackungsgegenständen bei Verpackungsmaschinen, insbesondere zur Übergabe von Tablettenstreifenpackungen aus einer Stanzeinrichtung an ein Transportband, einen Stapelschacht oder dergl., wobei ein mit mindestens einem Saugorgan zum Erfassen der Verpackungsgegenstände versehenes, um eine Achse drehbares Transportrad vorgesehen ist, an dem das Saugorgan seinerseits beweglich geführt und antreibbar ist, so daß es in einer Aufnahme- und in einer Abgabeposition jeweils vorübergehend radial zur Achse des Transportrads am weitesten außen und in Umfangsrichtung des Transportrads in Ruhe steht, wobei das Transportrad zwischen der Aufnahmeposition und der Abgabeposition um einen Übergabewinkel gedreht ist.

Vorrichtungen dieser Art zum Entnehmen von flach zusammen gefalteten Faltschachtelzuschnitten aus einem feststehenden Magazin, Aufstellen der Faltschachteln und Abgeben der aufgestellten Faltschachteln in einen Förderer sind beispielsweise aus der US-PS 4 211 153 oder der DE-OS 29 23 909 bekannt, wobei die Saugorgane mittels kulissengesteuerter Zwischengetriebe am in Drehrichtung gleichförmig angetriebenen Transportrad derart angeordnet sind, daß beim Aufnehmen und Abgeben der Faltschachteln jeweils vorübergehend ein Stillstand des Saugorgans eintritt. Die dazu erforderlichen Zwischengetriebe und Steuerkulissen sind kompliziert und aufwendig.

Aus der DE-OS 29 22 171 ist eine Vorrichtung zur Übergabe von Tablettenstreifenpackungen aus einer horizontal arbeitenden Stanzeinrichtung an ein horizontal angeordnetes Transportband bekannt, bei dem das die Saugorgane in starrer Anordnung tragende Transportrad an einer Schwinge aufgehängt ist und das Transportrad über ein Schrittschaltgetriebe und die Schwinge über ein Schubkurbelgetriebe derart angetrieben sind, daß durch Überlagerung der gewünschte Bewegungsablauf für die Saugorgane resultiert. Auch diese Konstruktionen sind aufwendig und arbeiten darüber hinaus jedenfalls bei hohen Taktzahlen dynamisch ungünstig.

Aus den vorgenannten Druckschriften ist es auch bekannt, an den Saugorganen den Unterdruck zum Aufnehmen und Abgeben der jeweiligen Verpackungsgegenstände entsprechend zu steuern. Außerdem ist es aus dem DE-GM 84 14 048 bekannt, am Saugorgan relativ zu diesem beweglich einen Abstreifer anzuordnen, der durch steuerbare Bewegungen den Verpackungsgegenstand von dem ihn haltenden Saugorgan lösen kann.

Im übrigen sind in der Getriebetechnik Schrittgetriebe auf der Basis hypozykloider Planetengetriebe beispielsweise aus der DE-OS 23 28 425 oder der DE-PS 22 61 012 bekannt. Derartige Getriebe bestehen aus einer als Planetenträger dienenden Antriebsscheibe, einem im Getriebegehäuse festen und koaxial mit der Antriebsscheibe angeordneten Zahnkranz, mindestens einem an der Antriebsscheibe exzentrisch gelagerten Planetenrad, dessen Außenverzahnung mit der Innenverzahnung des Zahnkranzes kämmt, ferner aus einem am Planetenrad exzentrisch zu dessen Achse drehbar gelagerten Gleitstein, und aus einer zur Antriebsscheibe koaxialen drehbaren Abtriebsscheibe, in der radial verschiebbar der Gleitstein geführt ist. Wird die Antriebsscheibe gleichförmig gedreht, führt die Abtriebsscheibe eine schrittweise Drehbewegung aus, wobei der Gleitstein bei einer vollständigen Umdrehung der Antriebs- und der Abtriebsscheibe die Bahn einer Hypozykloide durchläuft. Selbstverständlich können im Getriebe mehrere Planetenräder mit ihrem Gleitstein gleichmäßig über den Umfang des Zahnkranzes verteilt angeordnet sein.

Der Erfindung liegt die Aufgabe zugrunde, eine Vorrichtung der eingangs genannten Art so auszubilden, daß der Antrieb für die Saugorgane konstruktiv möglichst einfach ausgebildet ist und auch bei hohen Taktzahlen kinematisch und dynamisch besonders günstig arbeitet.

Diese Aufgabe wird nach der Erfindung dadurch gelöst, daß der Antrieb für das Saugorgan als ein hypozykloides Planetengetriebe ausgebildet ist, bestehend aus einem koaxial zum Transportrad drehbar gelagerten und antreibbaren Planetenträger, einem feststehend angeordneten kreisförmigen und mit dem sich gleichförmig drehenden Planetenträger koaxialen Abrollkranz, mindestens einem am Planetenträger exzentrisch und drehbar gelagerten Planetenrad, das am Abrollkranz innen ohne Gleiten abrollt, und aus einem am Planetenrad exzentrisch in Bezug auf dessen Achse drehbar gelagerten Stellstück, das radial verstellbar im Transportrad rein translatorisch, d. h. verschiebbar ohne Drehbewegung relativ zum Transportrad geführt ist, daß am Stellstück ein das Saugorgan tragender Halter starr befestigt ist, und daß die Radien der Teilkreise des Planetenrads und des Abrollkranzes so aufeinander abgestimmt sind, daß der Übergabewinkel gleich oder ein ganzzahliges Vielfaches von dem Winkel zwischen den durch die Bahnspitzen der Hypozykloiden und die Achse des Transportrades gehenden Radien ist.

Im Ergebnis bewegen sich bei der erfindungsgemäßen Vorrichtung die Saugorgane gleich wie die Stellstücke auf der Bahn einer Hypozykloiden und sind darüber hinaus durch die Führung der Stellstücke im Transportrad in jedem Punkt ihrer Bewegungsbahn in einer durch die Ausbildung dieser Führung vollständig bestimmten Weise ausgerichtet. Das Aufnehmen und Abgeben der Verpackungsgegenstände erfolgt in jeweils einer der Bahnspitzen der Hypozykloiden, wobei durch die erwähnte Führung der Verstellstücke im Transportrad die Saugorgane in diesen Bahnspitzen exakt die Stellung besitzen, die sie zum Aufnehmen bzw. Abgeben der Verpackungsgegenstände optimal befähigen. Der Größe des Übergabewinkels kann in einfacher Weise durch entsprechende Wahl des Radienverhältnisses der Teilkreise von Abrollkranz und Planetenrad Rechnung getragen werden. Selbstverständlich besteht auch die Möglichkeit, am Transportrad längs seines Umfangs mehrere Saugorgane mit zugehörigen Stellstücken und Planetenrädern vorzusehen, insbesondere deren Winkelabstand voneinander gleich dem Übergabewinkel zu wählen, so daß eines der Saugorgane in einer der Hypozykloidenspitzen einen Verpackungsgegenstand aufnehmen und das voranlaufende Saugorgan gleichzeitig den von ihm gehaltenen Verpackungsgegenstand in einer anderen Hypozykloidenspitze abgeben kann. Auch ermöglicht eine Hypozykloidenbahn mit mehr als zwei Bahnspitzen die Anordnung von weiteren Arbeitsstationen in jenen Bahnspitzen, die sich zwischen den dem Aufnehmen und Abgeben der Verpackungsgegenstände dienenden Bahnspitzen befinden. Eine insoweit bevorzugte Ausführungsform ist dadurch gekennzeichnet, daß das Saugorgan, sein Halter, das Stellstück und das Planetenrad vierfach vorgesehen und in Umfangsrichtung des Abrollkranzes um jeweils 90° gegeneinander versetzt angeordnet sind, und daß das Durchmesserverhältnis der Teilkreise für die Planetenräder einerseits und des Abrollkranzes andererseits 1 : 4 beträgt, so daß auch der Winkel zwischen aufeinander folgenden Hypozykloidenspitzen jeweils ein rechter Winkel ist. Das gleitfreie Abrollen der Planetenräder am Abrollkranz wird zweckmäßig dadurch erreicht, daß die Planetenräder außen und der Abrollkranz innen verzahnt sind und die Verzahnungen der Planetenräder mit der des Abrollkranzes kämmen. Zweckmäßig sind die Planetenräder drehfest mit je einer Scheibe verbunden, die einen Lagerzapfen für das zugehörige Stellstück aufweisen, das drehbar auf dem Lagerzapfen sitzt und in einer radialen Linearführung des Transportrads läuft.

Eine in konstruktiver Hinsicht bevorzugte Ausführungsform ist dadurch gekennzeichnet, daß der Abrollkranz in einem feststehenden Gehäuse angeordnet ist, daß im Gehäuse eine Antriebswelle gelagert ist, auf der drehfest der Planetenträger sitzt, der Lagerbolzen für die Planetenräder trägt, und daß das Transportrad drehbar auf der Antriebswelle gelagert ist, die als Hohlwelle ausgebildet ist, durch die hindurch die Saugorgane an eine Unterdruckquelle angeschlossen sind. Zweckmäßig sind die Halter der Saugorgane als zur Achse des Transportrads etwa parallele Arme ausgebildet, an welchen radial nach außen gerichtet die Saugorgane angeordnet sind. Unter diesen Umständen empfiehlt es sich, daß die Antriebswelle saugorganseitig ein koaxiales Rohr trägt, das am freien Ende über Schläuche an die Saugorgane angeschlossen ist.

Das Aufnehmen und Abgeben der Verpackungsgegenstände durch die Saugorgane kann durch entsprechende Steuerung der an den Saugorganen wirksamen Saugluft erfolgen. Stattdessen oder auch nur zusätzlich besteht die Möglichkeit, für jedes Saugorgan einen gegen die Kraft einer Rückstellfeder über das Saugorgan vorschiebbaren, den Verpackungsgegenstand vom Saugorgan ablösenden Abstreifer vorzusehen. In diesem Fall trägt der Halter vorzugsweise einen sich etwa parallel zu ihm erstreckenden und an ihm gelagerten doppelarmigen Abschlaghebel, der am saugorganseitigen Ende den Abstreifer gegen die Rückstellfeder betätigt und am anderen Ende seinerseits durch ein in Bezug auf die Bahnspitzen der Hypozykloiden feststehendes Stellteil betätigbar ist. Zweckmäßig weist das Stellteil eine drehbare Stellrolle auf, über die das Ende des Abschlaghebels am Stellteil abläuft. Für die Verstellung des Abschlaghebels in Richtung gegen das Stellteil kann ein Federglied zwischen dem Halter und dem Abschlaghebel angeordnet und am Halter ein Anschlag vorgesehen sein, an dem der Abschlaghebel unter der Wirkung des Federgliedes zur Anlage kommt.

Im folgenden wird die Erfindung an einem in der Zeichnung dargestellten Ausführungsbeispiel näher erläutert ; es zeigen :

Abb. 1 eine Vorrichtung nach der Erfindung in axialer Ansicht, teils in nur schematischer Darstellung,

Abb. 2 einen Axialschnitt durch die Vorrichtung nach Abb. 1,

Abb. 3 einen Halter mit Saugorgan im Fall seiner Ausrüstung mit einem Abstreifer.

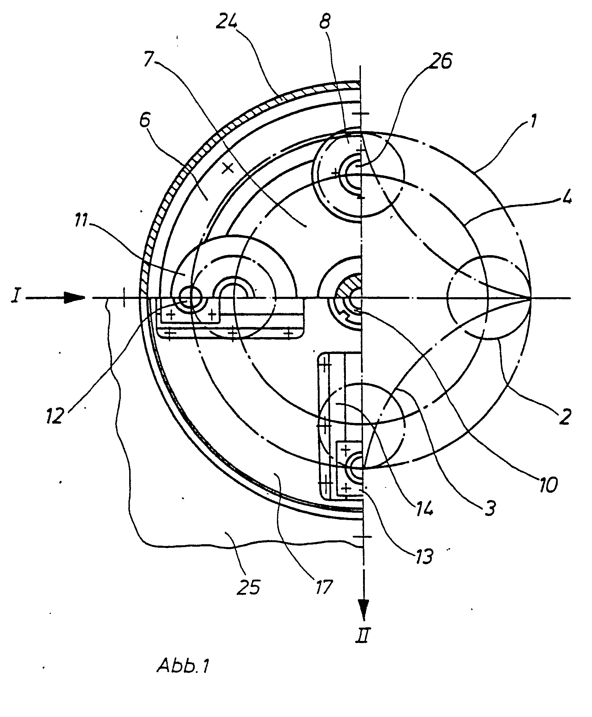

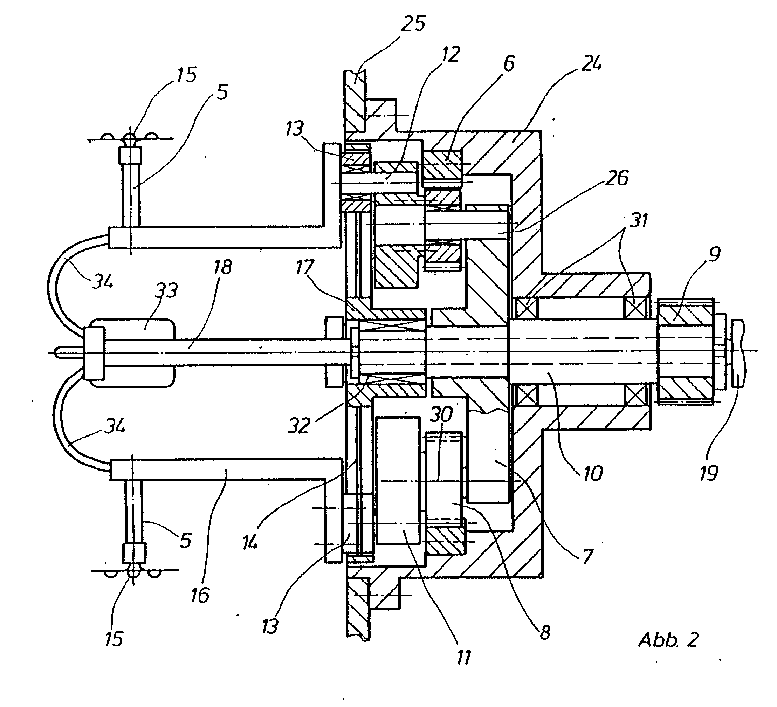

Die in der Zeichnung dargestellte Vorrichtung dient zum Aufnehmen, Überführen und Abgeben von bei 15 in Abb. 2 gezeigten flachen Verpackungsgegenständen, nämlich Tablettenstreifenpackungen, aus einer horizontal arbeitenden Stanzeinrichtung an einen vertikal angeordneten Stapelschacht, wobei die Aufnahmerichtung (Pfeil I) der Tablettenstreifenpackungen an der Stanzeinrichtung und die Abgaberichtung (Pfeil II) der Tablettenstreifenpackungen am Stapelschacht in der in Abb. 1 durch die Zeichnungsebene gebildeten Überführungsebene um einen Übergabewinkel von 90° gegeneinander verschwenkt sind. Die Stanzeinrichtung und der Stapelschacht selbst sind der Einfachheit wegen nicht dargestellt. Zum Erfassen der Verpackungsgegenstände 15 dienen Saugorgane 5, die sich an einem Transportrad 17 befinden, das um eine zur Überführungsebene senkrechte Achse drehbar ist. Die Saugorgane 5 sind ihrerseits an diesem Transportrad 17 derart beweglich, daß sie in der Aufnahmeposition (Pfeil I) und in der Abgabeposition (Pfeil II) jeweils vorübergehend radial zur Achse des Transportrads 17 in ihrer äußersten Stellung und in Umfangsrichtung des Transportrads 17 in Ruhe stehen. Der Antrieb für die Saugorgane 5 ist als hypozykloides Planetengetriebe ausgebildet. Es besteht aus einem koaxial zum Transportrad 17 drehbar gelagerten und antreibbaren Planetenträger 7, einem feststehend angeordneten kreisförmigen und mit dem gleichförmig drehend angetriebenen Planetenträger 7 koaxialen Abrollkranz 6, ferner aus innerhalb des Abrollkranzes 6 am Planetenträger 7 exzentrisch und drehbar gelagerten Planetenräder 8, die am Abrollkranz 6 an dessen Innenseite ohne Gleiten abrollen, und aus an den Planetenrädern 8 jeweils exzentrisch in Bezug auf deren Achse 30 drehbar gelagerten Stellstücken 13, die radial verstellbar im Transportrad 17 geführt sind. Starr an diesen Stellstücken 13 sind die Saugorgane 5 tragende Halter 16 befestigt. Die Radien der Teilkreise 1, 3 der Planetenräder 8 und des Abrollkranzes 6 sind so aufeinander abgestimmt, daß der Übergabewinkel gleich oder jedenfalls ein ganzzahliges Vielfaches von dem Winkel zwischen den Radien durch die Achse des Transportrads 17 und die Bahnspitzen der Hypozykloiden 3 ist, auf der sich die Stellstücke 13 bewegen, wenn sich der Planetenträger 7 dreht. Im einzelnen sind die Stellstücke 13 im Transportrad 17 rein translatorisch, also nur verschiebbar ohne Drehbewegung relativ zum Transportrad, geführte Gleitsteine. Die Saugorgane 5, ihre Halter 16, die Stellstücke 13 und die Planetenräder 8 sind im Ausführungsbeispiel vierfach vorgesehen und in Umfangsrichtung des Abrollkranzes 6 um jeweils 90° gegeneinander versetzt angeordnet. Das Durchmesserverhältnis der Teilkreise 1, 2 für die Planetenräder 8 einerseits und des Abrollkranzes 6 andererseits beträgt 1 : 4. Die Planetenräder 8 sind außen und der Abrollkranz 6 ist innen verzahnt. Die Verzahnungen der Planetenräder 8 kämmen mit der des Abrollkranzes 6, so daß zwischen den Planetenrädern 8 und dem Abrollkranz 6 kein Schlupf entstehen kann. Die Planetenräder 8 sind drehfest mit je einer Scheibe 11 verbunden, die einen Lagerzapfen 12 für das zugehörige Stellstück 13 aufweist, das über ein Wälzlager drehbar auf dem Lagerzapfen 12 sitzt und in einer radialen Linearführung 14 des Transportrads 17 läuft.

Im einzelnen ist der Abrollkranz 6 in einem am Maschinengestell 25 feststehenden Gehäuse 24 angeordnet. Im Gehäuse 24 ist die Antriebswelle 10 über zwei Wälzlager 31 gelagert. Drehfest auf der Antriebswelle 10 sitzt der Planetenträger 7, der die Lagerbolzen 26 für die Planetenträger 8 trägt, die ihrerseits mit Wälzlagern auf den Lagerbolzen 26 gelagert sind. Das Transportrad 17 ist durch ein Wälzlager 32 drehbar auf der Antriebswelle 10 gelagert. Die Antriebswelle 10 selbst ist als Hohlwelle ausgebildet, durch die hindurch über eine Drehdurchführung 19 die Saugorgane 5 an eine nicht dargestellte Unterdruckquelle angeschlossen sind.

Die Halter 16 der Saugorgane 5 sind als zur Achse des Transportrads 17 etwa parallele Arme ausgebildet, an welchen radial nach außen gerichtet die Saugorgane 5 angeordnet sind. Auf der Seite der Saugorgane 5 trägt die Antriebswelle 10 ein koaxiales Rohr 18, das mit dem Durchgang der Antriebswelle 10 in Verbindung steht und an seinem freien, dort geschlossenen Ende über einen Verteiler 33 und Schläuche 34 an die Saugorgane 5 angeschlossen ist.

Für jedes der Saugorgane 5 ist ein gegen die Kraft einer Rückstellfeder 28 über das Saugorgan 6 vorschiebbarer Abstreifer 27 vorgesehen, der dazu dient, den Verpackungsgegenstand 15 vom Saugorgan 5 zu lösen. Der Halter 16 trägt einen sich etwa parallel zu ihm erstreckenden und an ihm gelagerten doppelarmigen Abschlaghebel 20, der am saugorganseitigen Ende den Abstreifer 27 gegen die Rückstellfeder 28 betätigt. Am anderen Ende 36 ist der Abschlaghebel 20 seinerseits durch ein in Bezug auf die Bahnspitzen der Hypozykloiden 3 feststehendes Stellteil 21 betätigbar. Dieses Stellteil 21 besitzt eine drehbare Stellrolle 22, über die das Ende des Abschlaghebels 20 bei seiner Betätigung abläuft. Für die Verstellung des Abschlaghebels 20 in Richtung gegen das Stellteil 21 ist zwischen dem Halter 16 und dem Abschlaghebel 20 ein Federglied 23 angeordnet und am Halter 16 ein einstellbarer Anschlag 35 vorgesehen, an dem der Abschlaghebel 20 unter der Wirkung des Federglieds 23 zur Anlage kommt.

Im einzelnen entspricht die Bewegung der Saugorgane 5 näherungsweise der eines Punktes auf der Hypozykloiden 3, die dadurch zustande kommt, daß sich der Punkt einerseits auf dem Teilkreis 1 des gestellfesten Abrollkranzes 6 und andererseits auf dem Teilkreis 2 des auf dem gleichförmig umlaufenden Planetenträger 7 gelagerten Planetenrades 8 bewegt. Der Antrieb erfolgt kontinuierlich über eine Zahnriemenscheibe 9 und die Antriebswelle 10 auf den Planetenträger 7. Die am Planetenträger 7 gelagerten Planetenräder 8 wälzen sich schlupffrei auf dem innenverzahnten Abrollkranz 6 ab und übertragen mittels der in den Scheiben 11 befestigten Lagerzapfen 12 die Bewegung auf die Stellstücke 13 und damit auf die Halter 16 der Saugorgane 5. Durch die radial ausgerichteten Geradführungen 14 im Transportrad 17 führen die Stellstücke 13 und damit die Saugorgane 5 relativ zum Transportrad 17 reine Radialbewegungen ohne überlagerte Drehbewegungen aus, so daß die Saugorgane 5 in ihrer Stellung jeweils in den Hypozykloidenspitzen ebenfalls radial ausgerichtet sind, also die Verpackungsgegenstände 15 lagerichtig der Stanze entnommen bzw. in den Stapelschacht abgegeben werden können. In den Bahnspitzen der Hypozykloide 3 entsteht dabei kurzzeitig eine Rast, die ausreicht, die Verpackungsgegenstände 15 durch die Saugorgane 5 aufzunehmen bzw. abzugeben.

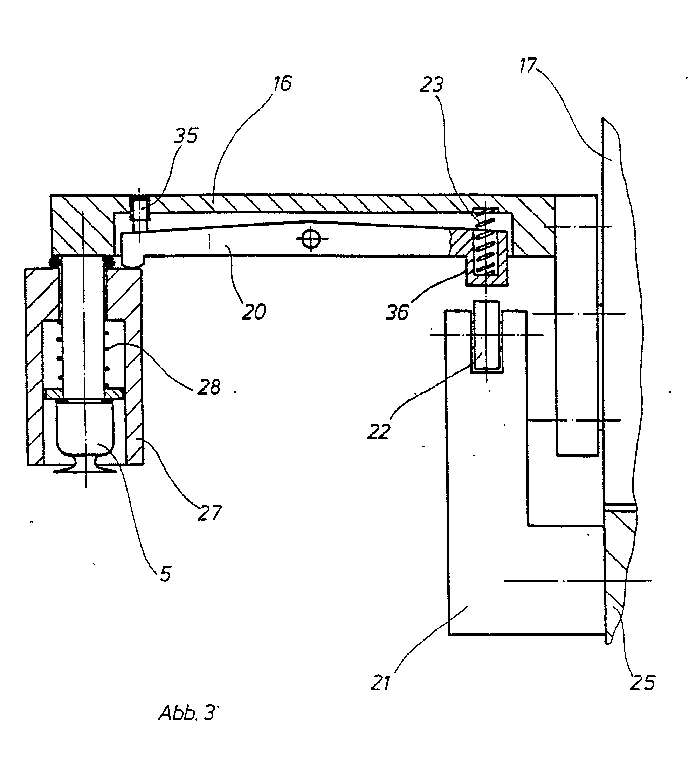

Das Abschlagen der Verpackungsgegenstände 15 ist aus Abb. 3 ersichtlich. Der Abschlaghebel 20 wird beim Erreichen der der Abgabe des Verpackungsgegenstandes 15 dienenden Hypozykloidenspitze zwangsläufig durch das feststehende Stellteil 21 betätigt. Dabei wird der Abstreifer 27 gegen die Rückstellfeder 28 über das Saugorgan 5 vorgeschoben und dadurch der Verpackungsgegenstand 15 vom Saugorgan 5 gelöst. Die Rückstellung des Abschlaghebels 20 erfolgt durch die Rückstellfeder 28 und das Federglied 23. Die drehbare Rolle 22 trägt dem Umstand Rechnung, daß sich während des Kontaktes zwischen dem Abschlaghebel 20 und dem Stellteil 21 der Halter 16 des Saugorgans 5 und damit auch der Abschlaghebel 20 geringfügig verdreht.

## Patentansprüche

1. Vorrichtung zum Aufnehmen, Überführen und Abgeben von flachen Verpackungsgegenständen (15) bei Verpackungsmaschinen, insbesondere zur Übergabe von Tablettenstreifenpackungen aus einer Stanzeinrichtung an ein Transportband, einen Stapelschacht oder dergl., wobei ein mit mindestens einem Saugorgan (5) zum Erfassen der Verpackungsgegenstände (15) versehenes, um eine Achse drehbares Transportrad (17) vorgesehen ist, an dem das Saugorgan (5) seinerseits beweglich geführt und antreibbar ist, so daß es in einer Aufnahme- und in einer Abgabeposition jeweils vorübergehend radial zur Achse des Transportrads (17) am weitesten außen und in Umfangsrichtung des Transportrads (17) in Ruhe steht, wobei das Transportrad (17) zwischen der Aufnahmeposition und der Abgabeposition um einen Übergabewinkel gedreht ist, dadurch gekennzeichnet, daß der Antrieb für das Saugorgan (5) als ein hypozykloides Planetengetriebe ausgebildet ist, bestehend aus einem koaxial zum Transportrad (17) drehbar gelagerten und antreibbaren Planetenträger (7), einem feststehend angeordneten kreisförmigen und mit dem sich gleichförmig drehenden Planetenträger (7) koaxialen Abrollkranz (6), mindestens einem am Planetenträger (7) exzentrisch und drehbar gelagerten Planetenrad (8), das am Abrollkranz (6) innen ohne Gleiten abrollt, und aus einem am Planetenrad (8) exzentrisch in Bezug auf dessen Achse (30) drehbar gelagerten Stellstück (13), das radial verstellbar im Transportrad (17) rein translatorisch, d. h. verschiebbar ohne Drehbewegung relativ zum Transportrad geführt ist, daß am Stellstück (13) ein das Saugorgan (5) tragender Halter (16) starr befestigt ist, und daß die Radien der Teilkreise (1, 2) des Planetenrads (8) und des Abrollkranzes (6) so aufeinander abgestimmt sind, daß der Übergabewinkel gleich oder ein ganzzahliges Vielfaches von dem Winkel zwischen den durch die Bahnspitzen der Hypozykloiden (3) und die Achse des Transportrades (17) gehenden Radien ist.

2. Vorrichtung nach Anspruch 1, dadurch gekennzeichnet, daß das Saugorgan (13) und das Planetenrad (8) vierfach vorgesehen und in Umfangsrichtung des Abrollkranzes (6) um jeweils 90° gegeneinander versetzt angeordnet sind, und daß das Durchmesserverhältnis der Teilkreise (1, 2) für die Planetenräder (8) einerseits und des Abrollkranzes (6) andererseits 1 : 4 beträgt.

3. Vorrichtung nach Anspruch 1 oder 2, dadurch gekennzeichnet, daß die Planetenräder (8) außen und der Abrollkranz (6) innen verzahnt sind und die Verzahnung der Planetenräder (8) mit der des Abrollkranzes (6) kämmen.

4. Vorrichtung nach einem der Ansprüche 1 bis 3, dadurch gekennzeichnet, daß die Planetenräder (8) drehfest mit je einer Scheibe (11) verbunden sind, die einen Lagerzpafen (12) für das zugehörige Stellstück (13) aufweist, das drehbar auf dem Lagerzapfen (12) sitzt und in einer radialen Linearführung (14) des Transportrads (17) läuft.

5. Vorrichtung nach einem der Ansprüche 1 bis 4, dadurch gekennzeichnet, daß der Abrollkranz (6) in einem feststehenden Gehäuse (24) angeordnet ist, daß im Gehäuse (24) eine Antriebswelle (10) gelagert ist, auf der drehfest der Planetenträger (7) sitzt, der Lagerbolzen (26) für die Planetenräder (8) trägt, und daß das Transportrad (17) drehbar auf der Antriebswelle (10) gelagert ist, die als Hohlwelle ausgebildet ist, durch die hindurch die Saugorgane (5) an eine Unterdruckquelle angeschlossen sind.

6. Vorrichtung nach einem der Ansprüche 1 bis 5, dadurch gekennzeichnet, daß die Halter (16) der Saugorgane (5) als zur Achse des Transportrads (17) etwa parallele Arme ausgebildet sind, an welchen radial nach außen gerichtet die Saugorgane (5) angeordnet sind.

7. Vorrichtung nach den Ansprüchen 5 und 6, dadurch gekennzeichnet, daß die Antriebswelle (10) saugorganseitig ein koaxiales Rohr (18) trägt, das am freien Ende über Schläuche (34) an die Saugorgane (5) angeschlossen ist.

8. Vorrichtung nach Anspruch 6, wobei für jedes Saugorgan (5) ein gegen die Kraft einer Rückstellfeder (28) über das Saugorgan (5) verschiebbarer, den Verpackungsgegenstand (15) vom Saugorgan (5) ablösender Abstreifer (27) vorgesehen ist, dadurch gekennzeichnet, daß der Halter (16) einen sich etwa parallel zu ihm erstreckenden und an ihm gelagerten doppelarmigen Abschlaghebel (20) trägt, der am saugorganseitigen Ende den Abstreifer (27) gegen die Rückstellfeder (28) betätigt und am anderen Ende (36) seinerseits durch ein in Bezug auf die Bahnspitzen der Hypozykloiden (3) feststehendes Stellteil (21) betätigbar ist.

9. Vorrichtung nach Anspruch 8, dadurch gekennzeichnet, daß das Stellteil (21) eine drehbare Stellrolle (22) aufweist, über die das Ende (36) des Abschlaghebels (20) am Stellteil (21) abläuft.

10. Vorrichtung nach Anspruch 8 oder 9, dadurch gekennzeichnet, daß für die Verstellung des Abschlaghebels (20) in Richtung gegen das Stellteil (21) ein Federglied (23) zwischen dem Halter (16) und dem Abschlaghebel (20) angeordnet und am Halter (16) ein Anschlag (35) vorgesehen ist, an dem der Anschlaghebel (20) unter der Wirkung des Federgliedes (23) zur Anlage kommt.

## Claims

1. Apparatus for receiving, transferring and discharging flat articles (15) to be packaged in packaging machines, in particular for the delivery of tablet strip packs from a stamping means to a transportation belt, a stacking shaft or the like, wherein there is provided a transportation wheel (17) which is provided with at least one suction member (15) for engaging the articles (15) to be packaged and which is rotatable about an axis and on which the suction member (5) is in turn movably guided and drivable so that in each of a receiving and discharging position it is temporarily disposed furthest outwardly radially with respect to the axis of the transportation wheel (17) and is at rest in the peripheral direction of the transportation wheel (17), wherein the transportation wheel (17) is turned between the receiving position and the discharging position through a delivery angle, characterised in that the drive for the suction member (5) is in the form of a hypocycloid planetary transmission comprising a planet carrier (7) which is drivable and mounted rotatably coaxially with respect to the transportation wheel (17), a stationary circular rolling ring (6) which is coaxial with the uniformly rotating planet carrier (7), at least one planet wheel (8) which is mounted eccentrically and rotatably on the planet carrier (7) and which rolls against the rolling ring (6) at the inside thereof without sliding, and an adjusting portion (13) which is rotatably mounted on the planet wheel (8) eccentrically with respect to the axis (30) thereof and which is guided radially displaceably in the transportation wheel (17) with a purely translatory action, that is to say slidably without rotary movement relative to the transportation wheel, that a holder (16) carrying the suction member (5) is rigidly fixed to the adjusting portion (13) and that the radii of the pitch circles (1, 2) of the planet wheel (8) and the rolling ring (6) are so matched to each other that the delivery angle is equal to or is an integral multiple of the angle between the radii passing through the tips of the paths of the hypocycloids (3) and the axis of the transportation wheel (17).

2. Apparatus according to claim 1 characterised in that the suction member (13) and the planet wheel (8) are provided in quadruplicate and are arranged in mutually displaced relationship through 90° relative to each other in the peripheral direction of the rolling ring (6) and that the ratio between the diameters of the pitch circles (1, 2) for the planet wheels (8) on the one hand and the rolling ring (6) on the other hand is 1 : 4.

3. Apparatus according to claim 1 or claim 2 characterised in that the planet wheels (8) are externally toothed and the rolling ring (6) is internally toothed and the teeth of the planet wheels (8) mesh with those of the rolling ring (6).

4. Apparatus according to one of claims 1 to 3 characterised in that the planet wheels (8) are each non-rotatably connected to a disc (11) which has a mounting pin (12) for the associated adjusting portion (13) which is rotatably carried on the mounting pin (12) and which moves in a radial linear guide (14) on the transportation wheel (17).

5. Apparatus according to one of claims 1 to 4 characterised in that the rolling ring (6) is disposed in a stationary housing (24), that mounted in the housing (24) is a drive shaft (10) on which is non-rotatably carried the planet carrier (7) which carries mounting pins (26) for the planet wheels (8) and that the transportation wheel (7) is rotatably mounted on the drive shaft (10) which is in the form of a hollow shaft through which the suction members (5) are connected to a reduced pressure source.

6. Apparatus according to one of claims 1 to 5 characterised in that the holders (16) of the suction members (15) are in the form of arms which are approximately parallel to the axis of the transportation wheel (17) and on which the suction members (5) are disposed in radially outwardly directed relationship.

7. Apparatus according to claims 5 and 6 characterised in that the drive shaft (10) carries at its suction member end a coaxial tube (18) which is connected at the free end to the suction members (5) by way of hoses (34).

8. Apparatus according to claim 6 wherein provided for each suction member (5) is a stripper (27) which is displaceable over the suction member (5) against the force of a return spring (28) and which releases the article (15) to be packaged from the suction member (5) characterised in that the holder (16) carries a double-armed knock-off lever (20) which extends substantially parallel to and is mounted on the holder and which at the end towards the suction member actuates the stripper (27) against the return spring (28) and which at the other end (36) can in turn be actuated by a control member (21) which is stationary with respect to the tips of the paths of the hypocycloids (3).

9. Apparatus according to claim 8 characterised in that the control member (21) has a rotatable control roller (22) by way of which the end (36) of the knock-off lever (20) moves against the control member (21).

10. Apparatus according to claim 8 or claim 9 characterised in that a spring member (23) is disposed between the holder (16) and the knock-off lever (20) for displacement of the knock-off lever (20) towards the control member (21) and provided on the holder (16) is a stop (35) against which the knock-off lever (20) comes to bear under the force of the spring member (23).

## Revendications

1. Dispositif pour prendre, transférer et déposer des articles d'emballage plats (15) dans une machine d'emballage, notamment pour le transfert d'emballages de comprimés en bande continue, depuis un dispositif de découpage à une bande convoyeuse, un conduit d'empilage ou analogue, et dans lequel il est prévu au moins une roue de transport (17), qui peut tourner autour d'un axe, comporte au moins un organe d'aspiration (5) servant à saisir les articles d'emballage (15) et sur laquelle l'organe d'aspiration (5) est pour sa part guidé en déplacement et peut être entraîné de sorte que, dans une position de réception et une position de délivrance, il est respectivement temporairement dans sa position d'éloignement maximum dans le sens radial par rapport à l'axe de la roue de transport (17) et au repos dans la direction circonférentielle de la roue de transport (17), et dans lequel la roue de transport (17) pivote sur un angle de transfert entre la position de réception et la position de délivrance, caractérisé en ce que le dispositif d'entraînement pour l'organe d'aspiration (5) est réalisé sous la forme d'un engrenage planétaire hypocycloïdal, constitué par un porte-satellites (7) monté rotatif et pouvant être entraîné coaxialement par rapport à la roue de transport (17), par une couronne circulaire fixe de roulement (6), coaxiale au porte-satellites (7) et tournant d'une manière uniforme, par au moins un pignon satellite (8) monté rotatif en position excentrée sur le porte-satellites (7) et roulant sans glisser sur la face intérieure de la couronne de roulement (6), et par un organe de réglage (13), monté rotatif sur le pignon satellite (8) en étant excentré par rapport à son axe (30), et guidé en étant mobile radialement selon un pur mouvement de translation dans la roue de transport (17), c'est-à-dire de manière à pouvoir se déplacer sans mouvement de rotation par rapport à la roue de transport, qu'un support (16) portant l'organe d'aspiration (5) est fixé rigidement sur l'organe de réglage (13) et que les rayons des cercles primitifs (1, 2) du pignon satellite (8) et de la couronne de roulement (6) sont accordés les uns aux autres de manière que l'angle de transfert soit égal à l'angle ou à un multiple entier de l'angle entre les rayons passant par les pointes de la trajectoire en forme d'hypocycloïde (3) et l'axe de la roue de transport (17).

2. Dispositif selon la revendication 1, caractérisé en ce que l'organe d'aspiration (13) et le pignon satellite (8) sont prévus tous deux au nombre de quatre et sont décalés réciproquement de 90°, et que le rapport des diamètres des cercles primitifs (1, 2) des pignons satellites (8) d'une part et de la couronne de roulement (6) d'autre part est égal à 1 : 4.

3. Dispositif selon la revendication 1 ou 2, caractérisé en ce que les pignons satellites (8) sont dentés extérieurement, que la couronne de roulement (6) est dentée intérieurement et que la denture des pignons satellites (8) engrène avec celle de la couronne de roulement (6).

4. Dispositif selon l'une des revendications 1 à 3, caractérisé en ce que les pignons satellites (8) sont reliés de manière à être solidaires en rotation à un disque respectif (11), qui comporte un tourillon (12) pour l'organe de réglage associé (13), qui est monté rotatif sur le tourillon (12) et circule dans un guide linéaire radial (14) de la roue de transport (17).

5. Dispositif selon l'une des revendications 1 à 4, caractérisé en ce que la couronne de roulement (6) est disposée dans un boîtier fixe (24), que dans le boîtier (24) est tourillonné un arbre d'entraînement (10), sur lequel est monté, d'une manière solidaire en rotation, le porte-satellites (7), qui porte des tourillons (26) pour les pignons satellites (8), et que la roue de transport (17) est montée rotative sur l'arbre d'entraînement (10) agencé sous la forme d'un arbre creux, à travers lequel les organes d'aspiration (5) sont raccordés à une source de dépression.

6. Dispositif selon l'une des revendications 1 à 5, caractérisé en ce que les supports (16) des organes d'aspiration (5) sont réalisés sous la forme de bras, qui sont approximativement parallèles à l'axe de la roue de transport (17) et sur lesquels les organes d'aspiration (5) sont montés en étant dirigés radialement vers l'extérieur.

7. Dispositif selon les revendications 5 et 6, caractérisé en ce que l'arbre d'entraînement (10) porte, sur le côté des organes d'entraînement, un tube coaxial (18) raccordé, à son extrémité libre, aux organes d'aspiration (5) par l'intermédiaire de tuyaux (34).

8. Dispositif selon la revendication 6, dans lequel il est prévu, pour chaque organe d'aspiration (5), un dispositif de dégagement (27) déplaçable par l'intermédiaire de l'organe d'aspiration (5) à l'encontre de la force d'un ressort de rappel (28) et dégageant l'article d'emballage (15) de l'organe d'aspiration (5), caractérisé en ce que le support (16) porte un levier de dégagement (20) à deux bras, qui est approximativement parallèle au support, est tourillonné sur ce dernier, actionne, sur l'extrémité située du côté de l'organe d'aspiration, le dispositif de dégagement (27) à l'encontre du ressort de rappel (28) et peut être actionné, pour sa part, sur son autre extrémité (36), par un élément de réglage (21) fixe par rapport aux pointes de la trajectoire en forme d'hypocycloïde (3).

9. Dispositif selon la revendication 8, caractérisé en ce que l'élément de réglage (21) comporte un rouleau de réglage rotatif (22), sur lequel l'extrémité (36) du levier de dégagement (20) circule sur l'élément de réglage (21).

10. Dispositif selon la revendication 8 ou 9, caractérisé en ce que pour le déplacement du levier de dégagement (20) en direction de l'élément de réglage (21), il est prévu un élément de ressort (23) disposé entre le support (16) et le levier de dégagement (20) et une butée (35), qui est située sur le support (16) et contre laquelle vient s'appliquer le levier de dégagement (20) sous l'action de l'élément de ressort (23).

Abb.1

Abb. 2

Abb. 3